# EUROPEAN PATENT SPECIFICATION

(11) **EP 2 433 873 B1**
(45) Date of publication and mention of the grant of the patent: **28.08.2013**
(21) Application number: 11171208.9
(22) Date of filing: 23.06.2011
(51) Int. Cl.: B65B 51/14, B65B 67/00, B31B 47/02, B65H 35/00, B26D 1/06, B29C 65/22, B29C 65/78

(54) **Automatic thermosealer**
Automatisches Wärmeschweissgerät
Appareil automatique de soudage thermique

(30) Priority: 23.09.2010 IT BO20100570
(43) Date of publication of application: 28.03.2012
(73) Proprietor: MOCOM S.r.L., 40026 Imola (BO) (IT)
(72) Inventor: Bellosi, Angelo, 40026 Imola (Bologna) (IT); Nanni, Eros, 40026 Imola (Bologna) (IT)
(74) Representative: Lunati & Mazzoni S.r.L.

(56) References cited:
- EP-A1- 1 897 516
- US-A- 4 025 383

## Description

The present invention relates to an automatic thermosealer of the type pointed out in the preamble of the independent claims.

In the medical and dental field use of sterile instruments is necessary, so as to prevent infections from being transmitted from patient to patient.

Normally a reusable instrument such as a scalpel or a cutter is used on a patient, then it is washed manually or in a thermodisinfector, rinsed, dried and sterilised. Sterilisation in a steam autoclave is considered the gold standard in this field. Since the sterilised instruments are not always used immediately after their sterilisation, normally the instruments to be sterilised are introduced into an autoclave wrapped in envelopes aiming at preserving their sterility state after extraction from the autoclave. Use of envelopes made of two coupled materials, paper and film is known, these materials offering several advantages. The film is transparent and therefore allows the user to see the envelope's contents. The paper material has pores that open due to the high temperature reached in the autoclave and therefore enable the steam to enter the envelope and perform its sterilisation function; as the temperature decreases at the end of the cycle, and the residual moisture is eliminated, the pores close again thus inhibiting the environmental air from entering and therefore maintaining the sterility state of the instrument contained therein. In addition, often the paper material contains coloured indicators enabling the operator to distinguish the envelopes already submitted to sterilisation from those that have not yet being sterilised.

Normally, each individual instrument must be put into the envelope before being sterilised in the autoclave. Presently there are on the market rolls having variable widths (50, 75, 100, 150, 200, 250, 300 millimetres, for example) and a standard length of 200 metres, from which envelopes adapted to contain the individual instruments are obtained, being then closed by two sealings at the ends.

Two documents, US 7074362 and EP 1897516 are to be considered as the important prior art.

US 7074362 discloses a thermosealer that is used with preformed envelopes. The envelope is placed on a heated surface and an arm must be lowered manually by the operator so as to close the envelope and apply two thermal sealings to an edge of the envelope; a sealing closes the instrument in a first envelope and a second sealing parallel to the first one forms a new envelope. A knife carried by the arm is used for carrying out a cut between the two sealings. The particular character of this patent resides in that the thermosealer carries out two sealings simultaneously.

The patent application EP 1897516, on the contrary, in particular discloses an adjustable roll-holder to be combined with a thermosealer similar to that described in patent US 7074362. This thermosealer however carries out a single sealing at a time.

An important part of the working time of hospital attendants/nurses/dental scrub nurses is spent in cleaning, packaging and sterilising the instruments used during the therapeutic steps. In addition, as it is well known, the repetitive movements can be the cause of skeletal muscle trouble of various seriousness in the operator.

When the operator uses a traditional thermosealer of the manual type generally he/she prepares a series of envelopes sealed on three sides; when a sufficient number of envelopes is ready, he/she is obliged to extract the roll from the sealing region and at that point he/she can carry out the second sealing on each envelope so that the instrument to be sterilised is sealingly closed inside the envelope.

Under this situation the technical task underlying the present invention is to devise a thermosealer capable of substantially obviating the mentioned drawbacks.

Accordingly, it is an aim of the present invention to provide a thermosealer of practical use, enabling the time dedicated by the medical staff to the steps of preparing/sterilising the instruments to be shortened.

It is a further aim of the present invention to prevent the operator's arm from carrying out repetitive movements and efforts. It is an additional aim of the invention to minimise the amount of coupled paper and film material used for preparing the envelopes, since these rolls are rather expensive.

Finally, due to automation of the operations, a constant and repeatable quality of the sealings can be ensured.

The technical task mentioned and the aims specified are achieved by a thermosealer as claimed in the appended independent claims.

Preferred embodiments are highlighted in the sub-claims.

The object of the present invention will be now described with the aid of the following figures representing:
**Fig. 1** the thermosealer taken as a whole;
**Fig. 2** the advancing or feeding mechanism of the coupled paper and film material;
**Fig. 3** the sealing mechanism;
**Fig. 4** the feeding and cutting mechanism of the coupled paper and film material (first sealing);
**Fig. 5** the sealing mechanism of the envelope (second sealing)
**Fig. 6** the hot-air path.

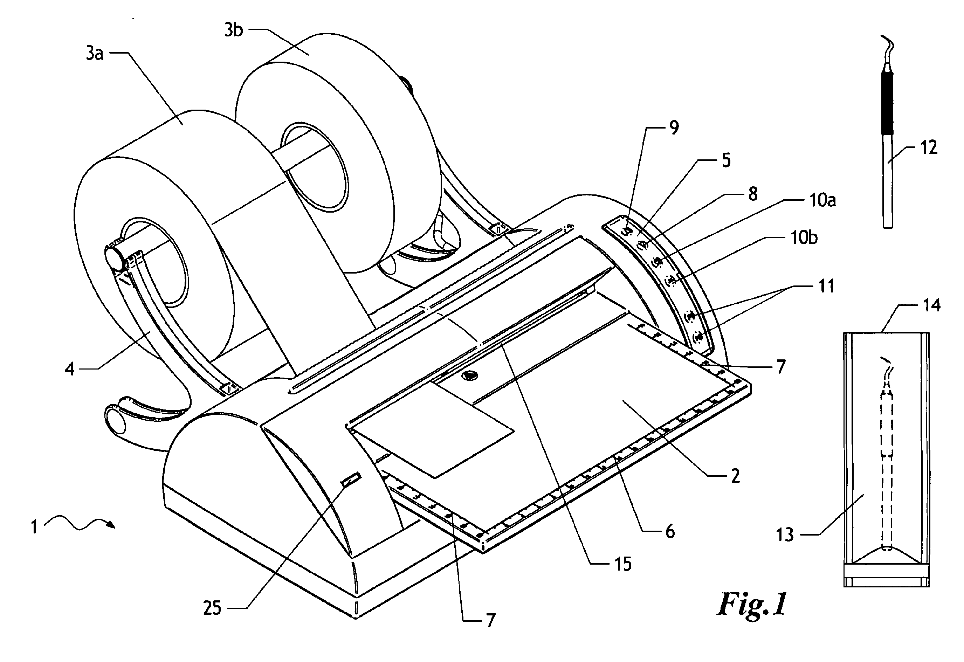

In Fig. 1 the thermosealer as a whole is denoted by reference numeral **1**. It is adapted to form envelopes **13** starting from rolls **3a** and **3b** of coupled paper and film material (in the following referred to as "coated paper") **3** and briefly comprising: winding and unwinding means for the roll of coated paper 3 including at least one roll-holder **4**, a rest surface **2** for the coated paper 3, sealing means **20** and cutting means **28** for the coated paper, quick activation means for reaching various suitable purposes and consisting of an operating push-button panel **5**, a centimetre scale **6** for measurement of the instruments, a centimetre scale **7** for measurement of the amount of coated paper, a signalling LED **25**.

In Fig. 1 the thermosealer is represented as loaded with two rolls 3a and 3b. In practice it is possible to work with one of the two rolls 3 at a time of coated paper represented in the figure; the roll 3b that is not used at that moment can remain on the roll-holder 4, but the coated paper has to be removed from the feeding mechanism. Alternatively, it is possible to simultaneously work with the two rolls obtaining envelopes of identical sizes in length.

The hereinafter described sequence of operations relates to use of the thermosealer with only one roll. In normal use, the operator measures an instrument **12** to be put into an envelope on the centimetre scale 6 and, through the coated-paper feeding push-button **8**, causes moving forward of a length of coated paper a little longer than that of the instrument. Should the amount of coated paper be erroneously too much, the operator can cause the excess coated paper to be taken up by means of the coated-paper retraction push-button **9**. Operation of the motor causes the coated paper to be moved forward and backward until the push-button 8 or 9 is maintained pressed; when the push-button is released the forward or backward movement is stopped. When the amount of coated paper is correct, the operator presses the push-button **10a** that will carry out sealing and cutting simultaneously. Once these two operations have been completed, the coated paper of roll 3a is moved backward automatically by a few millimetres, so that the sealing region is free from the coated paper.

When the operator has to put many instruments of same size into the envelopes, he/she can, through suitable storage means, store the length of the coated paper section to be pulled out in the following manner: the operator keeps one of the two storage push-buttons **11** pressed for a time exceeding 3 seconds, then he/she causes the desired amount of coated paper, through the push-button 8, to be moved forward or, through the push-button 9, to be taken up; at the moment he/she activates suitable quick activation means, in particular when he/she presses the sealing and cutting push-button 10a, the envelope length is automatically stored. Afterwards, each time the operator wishes to have an envelope of that size, he/she presses the storage push-button 11. Two storage push-buttons 11 are present on the machine and they allow two different lengths of coated paper to be stored.

In a further embodiment it is also possible to produce a number of envelopes at will, all having the same sizes, in an automatic manner: the operator sets a desired number of envelopes of the preset size and the thermosealer automatically produces them until the set number has been reached.

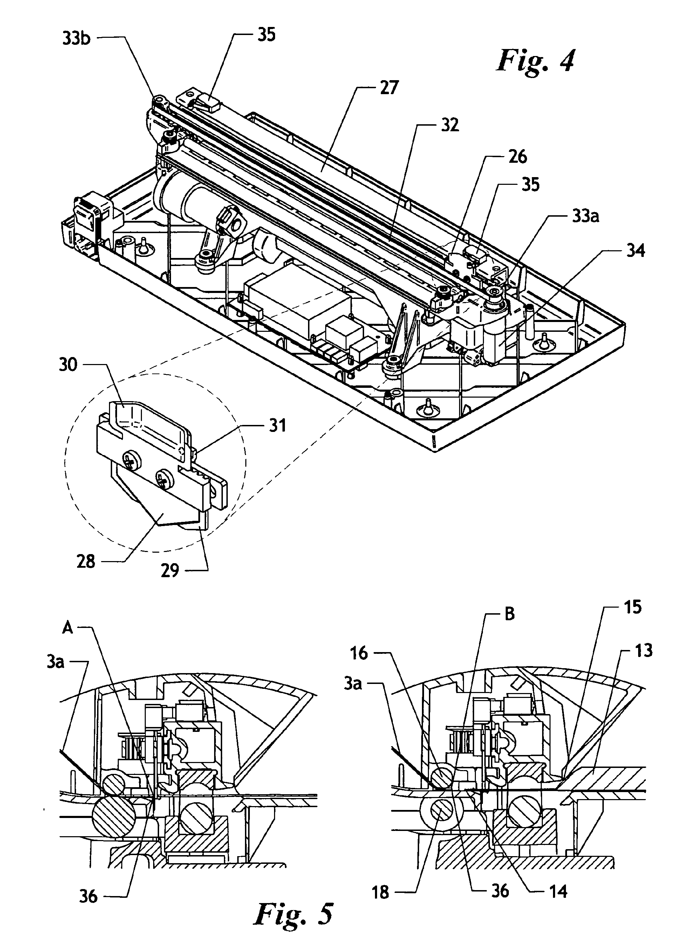

At this point an envelope 13 sealed at the sides thereof is at the operator's disposal. The instrument 12 is inserted into the envelope 13 and execution of the second sealing parallel to the first one occurs, the open side **14** being inserted into slit **15** and suitable quick activation means being activated, in particular the push-button **10b** being pressed. The second sealing takes place in the same sealing region as the first sealing, the envelope to be sealed being however inserted from the front of the machine instead of from the back. Since the roll 3a of coated paper has been moved backward automatically, this ensures that the end portion of the roll does not come into contact with the side 14 of the envelope 13 that is inserted from the front. Contact between the end portion **36** of the roll and the side 14 to be sealed could in fact cause crumples on the coated paper and therefore give rise to badly made sealings (also see Fig. 5).

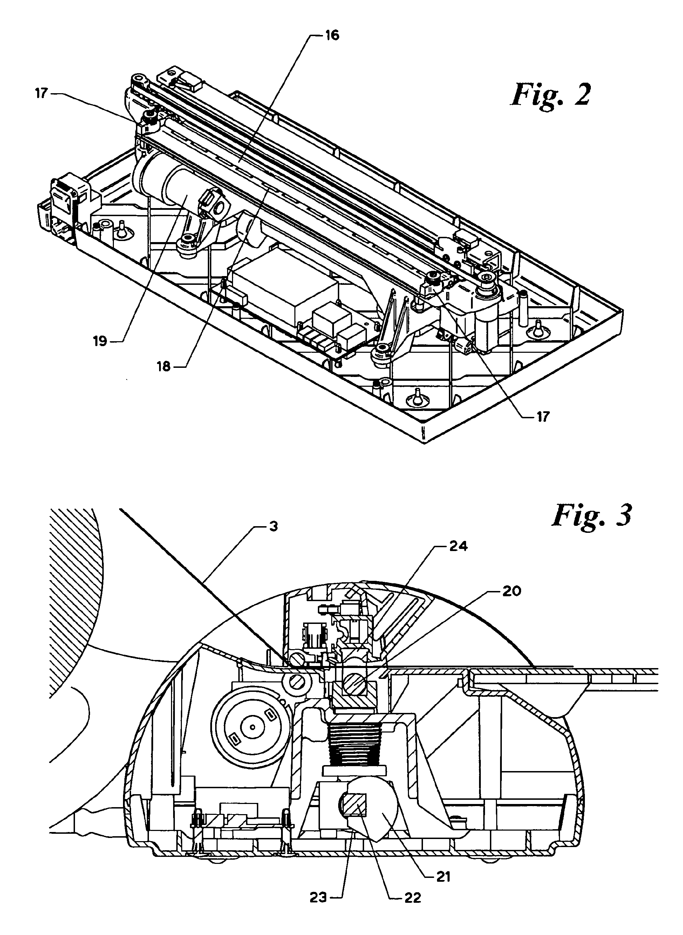

Shown in Fig. 2 is the advancing or feeding mechanism for the roll of coated paper. Denoted at 1**6** is a pressure roller maintained tightly close to the feeding roller **18** by two supports **17** driven by two springs. The pressure roller 16 is an idler roller moved by the feeding roller 18. The feeding roller 18, in turn, is moved by a feeding reduction gear **19** controlled by an encoder. This enables the machine to detect how much coated paper is unwound and therefore, if wished, to store this amount by the storage push-button 11.

Fig. 3 shows the sealing mechanism. In particular, identified as 20 is a resistor that is lifted by two cams **21**, rigidly connected to a shaft **22**, powered by a reduction gear **23** for lifting the resistor. When the push-button 10a or 10b is pressed, the resistor 20 lifts up and compresses the coated paper 3 on a counter-resistor **24** made of silicone, for a predetermined time sufficient to carry out the sealing. Obviously, the resistor must have previously reached the right work temperature, which is made apparent by the steady lighting of a green LED 25 on the machine front. The two up and down end-of-stroke positions of resistor 20 are controlled by a microswitch.

Shown in Fig. 4 is the cutting mechanism. Cutting of the coated paper takes place simultaneously with the first sealing, and is carried out by a blade assembly **26**. The blade assembly 26 is fastened to a runner **31** sliding transversely inside a guide **27**. The blade assembly 26 consists of a blade 28, a presser **29** for the coated paper, a blade support **30** and runner 31. The blade assembly 26 is rigidly fastened to a toothed belt **32** supported by two toothed pulleys (driving pulley **33a** and belt-tightening pulley 33b) enabling movement by means of a cutting reduction gear **34**. The blade assembly 26 slides transversely from one end to the other, controlled by two microswitches **35** at the end-of-stroke positions. In addition, the cutting speed is automatically managed by an acceleration and deceleration ramp facilitating operation thereof; the ramp is managed by an electronic card.

Presser 29 for the coated paper is such shaped that it pushes the coated paper downwards thus obtaining a guillotine effect ensuring accomplishment of a precise cut.

In Fig. 5, at the end of the first sealing and cutting operations by means of push-button 10a, the end portion 36 of the roll is at position A. When cutting has been completed, the roll 3a is automatically retracted by a few millimetres and therefore the edge 36 moves to position B, so that carrying out of the second sealing is facilitated and roll 3a is not required to be slipped off, being retained between the pressure roller 16 and feeding roller 18. Due to the foregoing, when it is necessary to prepare a new envelope, roll 3a does not need to be manually introduced again into the roll-feeding mechanism.

When the operator carries out the second sealing of the open side 14 of the envelope 13, he/she must manually insert envelope 13 into the slit 15, being sure that the sealing region is free from the end 36 of the roll.

A further advantage, resulting from the backward movement of the coated paper after the cut, resides in the fact that the coated paper is moved away from the resistor, in particular from the region where heat is very high. Being the coated paper pressed between the feeding roller and pressure roller, it is prevented from swelling or crumpling, due to heat. As a result, during the following forward movement, passage of the coated paper through the slit between the resistor and counter-resistor takes place without jamming.

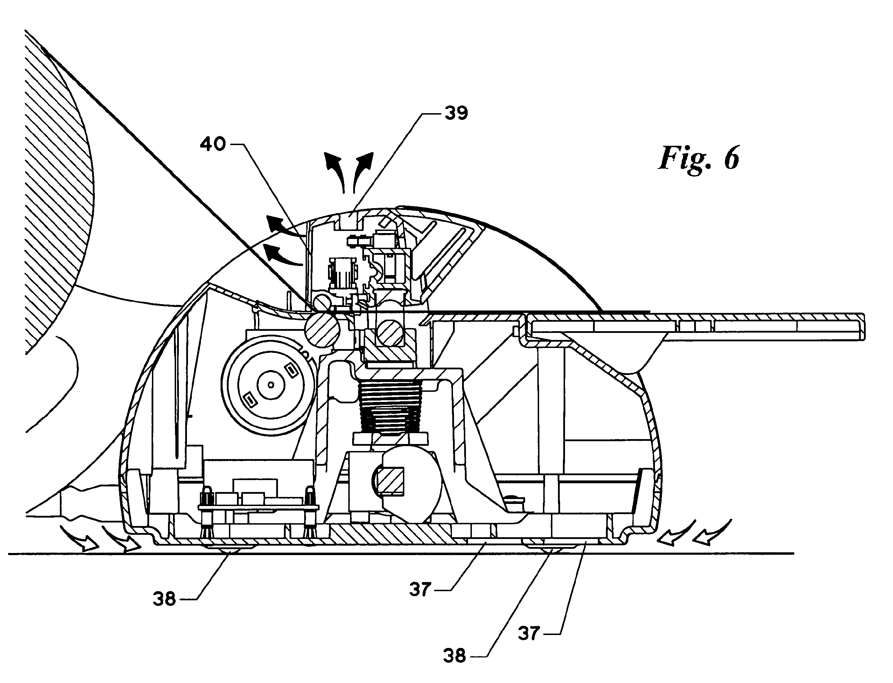

Finally, represented in Fig. 6 is the air circulation inside the machine. This circulation is spontaneous because the air is not moved by a fan. Obviously resistor 20, reaching the operating temperature of 200°C, generates heat that must be dispersed. Thus, two rubber feet **38** have been provided which maintain the thermosealer 1 bottom raised from the support surface, and in the lower shell a series of slits **37** is provided to enable air from the external environment to enter (white arrows). After entering, the air acquires heat through the region of resistor 20, and comes out of the upper slit **39** and rear slits 40**,** so that heat generated by resistor 20 is ejected (black arrows).

In a further embodiment not shown, movable and/or removable paper guides for rolls 3a and 3b are provided; they are placed on the roll-holder 4 or in the vicinity of the rear slit for entry of the coated paper, on the thermosealer 1 body.

## Claims

1. A method of producing envelopes (13) from a roll (3a) of coated paper (3) for holding instruments (12) to be sterilised in an autoclave using a thermosealer (1), said method comprising the following steps:
- measuring the length of said instrument to be sterilised (12);
- moving forward or feeding an amount of said coated paper (3) adapted for said instrument to be sterilised (12);
- carrying out a first sealing and cutting operation on said coated paper (3) so as to produce said envelope (13) including an open side (14);
- introducing said instrument (12) into said envelope (13);
- inserting said envelope (13) at said open side (14) into a slit (15) present in said thermosealer (1);
- carrying out the second sealing of said envelope (13) at said open side (14); and being **characterised in that** said coated paper (3) disposed in said thermosealer (1) is automatically retracted immediately after said first sealing and cutting operation has been carried out so that accomplishment of said second sealing is made possible without damaging the end portion (36) of said roll (3a).

2. A method as claimed in claim 1, wherein the desired length of said envelope (13) is stored by pressing a storage push-button (11) so that said length can be subsequently retrieved.

3. A method as claimed in claim 2, wherein the operator, through said storage push-button (11), inputs the length of said envelope (13) and the desired number of envelopes (13), said thermosealer (1) being adapted to prepare them automatically.

4. A method as claimed in one or more of the preceding claims, comprising the step of adjusting the amount of said coated paper (3) causing retraction of same.

5. A thermosealer (1) for production of envelopes (13) for holding instruments (12) to be sterilised in an autoclave, starting from a roll (3a) of coated paper (3), said thermosealer (1) comprising:
- winding and unwinding means (4) of said roll (3a);
- a rest surface (2) for said coated paper (3);
- sealing means (20) for said coated paper (3);
- cutting means (28) for said coated paper (3);
and **being characterised in that** it is adapted to automatically activate said winding and unwinding means (4) for controlling partial winding of said coated paper (3) following activation of said cutting means (28).

6. A thermosealer as claimed in claim 5, wherein said cutting means (28) substantially acts simultaneously with said sealing means (20).

7. A thermosealer as claimed in claim 5 or 6, comprising storage means adapted to store the amount of coated paper (3) that is unwound for production of a plurality of said envelopes (13) of the same length.

8. A thermosealer as claimed in one or more of claims 5-7, comprising quick activation means (10a) of said sealing means (20) and cutting means (28) simultaneously, and quick activation means (10b) of said sealing means (20) alone.

9. A thermosealer as claimed in one or more of claims 5-8, comprising a presser for the coated paper (29) such shaped as to facilitate the action of a blade constituting said cutting means (28), through a lead-in means on both sides, and in addition acting as a rear movable counter element that, combined with a front fixed counter element formed in the end portion of a chute, enables a precise cut to be obtained.

10. A thermosealer as claimed in one or more of claims 5-9, comprising paper guides for centring said roll (3a) on a roll-holder, constituting part of the winding and unwinding means (4).

11. A thermosealer as claimed in one or more of claims 5-10, comprising paper guides for centring said roll (3a) on a rear inlet slit for said coated paper (3).

12. A thermosealer as claimed in one or more of claims 5-11, wherein said rest surface (2) comprises a centimetre scale (7) for measurement of said coated paper (3).

13. A thermosealer as claimed in one or more of claims 5 to 12, wherein the winding and unwinding means (4) are adapted to move two rolls (3a, 3b) simultaneously so as to simultaneously obtain two of said envelopes (13) of the same length.

## Patentansprüche

1. Methode zum Herstellen von Beuteln (13) ausgehend von Rollen (3a) kaschierten Papiers (3) zum Verpacken von im Autoklav zu sterilisierenden Instrumenten (12) unter Verwendung eines Wärmeschweißgeräts (1), wobei die genannte Methode die folgenden Schritte umfasst:
- Messen der Länge des genannten zu sterilisierenden Instruments (12);
- Vorschub einer Menge des genannten kaschierten Papiers (3), das für das genannte zu sterilisierende Instrument (12) geeignet ist;
- Ausführen einer ersten Schweißung und Schneiden des genannten kaschierten Papiers (3), um den genannten Beutel (13) herzustellen, der eine offene Seite (14) umfasst;
- Einführen des genannten Instruments (12) in den genannten Beutel (13);
- Einführen des Beutels (13) mit der genannten offenen Seite (14) in das Innere des Schlitzes (15) auf dem genannten Wärmeschweißgerät (1);
- Ausführen der zweiten Schweißung des genannten Beutels (13) auf der genannten offenen Seite (14);
**dadurch gekennzeichnet, dass** das genannte kaschierte Papier (3) in dem genannten Wärmeschweißgerät (1) nach dem genannten Ausführen der genannten ersten Schweißung und des Schneidens automatisch zurückgezogen wird, um das genannte Ausführen der genannten zweiten Schweißung möglich zu machen, ohne das Ende (36) der genannten Rolle (3a) zu beschädigen.

2. Methode nach Anspruch 1, bei der die gewünschte Länge des genannten Beutels (13) gespeichert wird, indem eine Speichertaste (11) betätigt wird, um anschließend wieder aufgerufen zu werden.

3. Methode nach Anspruch 2, bei der der Bediener die Länge des genannten Beutels (13) über die genannte Speichertaste (11) eingibt und die gewünschte Anzahl der genannten Beutel (13), da das genannte Wärmeschweißgerät (1) geeignet ist, diese automatisch herzustellen.

4. Methode nach einem oder mehreren der vorangegangenen Ansprüche, die den Schritt des Einstellens der Menge des genannten kaschierten Papiers (3) einschließt, indem dieses zurückgezogen wird.

5. Wärmeschweißgerät (1) zur Herstellung von Beuteln (13) zum Unterbringen von im Autoklav zu sterilisierenden Instrumenten (12) ausgehend von einer Rolle (3a) kaschierten Papiers (3), wobei das genannte Wärmeschweißgerät (1) Folgendes umfasst:
- Elemente zum Auf- und Abwickeln (4) der genannten Rolle (3a);
- eine Auflagefläche (2) für das genannte kaschierte Papier (3);
- Elemente zum Schweißen (20) des genannten kaschierten Papiers (3);
- Elemente zum Schneiden (28) des genannten kaschierten Papiers (3);
und **dadurch gekennzeichnet, dass** es geeignet ist, die genannten Elemente zum Auf- und Abwickeln (4) automatisch einzuschalten, um ein teilweises Aufwickeln des genannten kaschierten Papiers (3) nach dem Einschalten der genannten Elemente zum Schneiden (28) zu steuern.

6. Wärmeschweißgerät nach Anspruch 5, bei dem die genannten Elemente zum Schneiden (28) im Wesentlichen gleichzeitig mit den genannten Elementen zum Schweißen (20) eingesetzt werden.

7. Wärmeschweißgerät nach Anspruch 5 oder 6, das Speicherelemente umfasst, die zum Speichern der Menge des kaschierten Papiers (3) geeignet sind, das für die Herstellung einer Vielzahl der genannten Beutel (13) der gleichen Länge abgewickelt wird.

8. Wärmeschweißgerät nach einem oder mehreren der Ansprüche 5-7, das Elemente zur schnellen Betätigung (10a) der genannten Elemente zum Schweißen (20) und der Elemente zum gleichzeitigen Schneiden (28) und Elemente zur schnellen Betätigung (10b) nur der genannten Elemente zum Schweißen umfasst (20).

9. Wärmeschweißgerät nach einem oder mehreren der Ansprüche 5-8, das einen profilierten Material-Niederhalter (29) umfasst, um die Wirkung einer Klinge, die die genannten Elemente zum Schneiden (28) bildet, über eine Einbuchtung auf beiden Seiten zu erleichtern und die außerdem als bewegliches hinteres Gegenstück dient, das in Kombination mit einem vorderen festen Gegenstück im Endteil einer Rutsche das Erzielen eines präzisen Schnitts ermöglicht.

10. Wärmeschweißgerät nach einem oder mehreren der vorangegangenen Ansprüche 5-9, das eine Papierführung zum Zentrieren der genannten Rolle (3a) auf einem Rollenhalter umfasst, der Teil der Elemente zum Auf- und Abwickeln ist (4).

11. Wärmeschweißgerät nach einem oder mehreren der Ansprüche 5-10, das eine Papierführung zum Zentrieren der genannten Rolle (3a) auf einem Schlitz zum Einführen hinter dem genannten kaschierten Papier (3) umfasst.

12. Wärmeschweißgerät nach einem oder mehreren der Ansprüche 5-11, bei dem die genannten Auflagefläche (2) eine Skala in Zentimetern (7) zum Messen des genannten kaschierten Papiers (3) umfasst.

13. Wärmeschweißgerät nach einem oder mehreren der Ansprüche 5 bis 12, bei dem die Elemente zum Auf- und Abwickeln (4) geeignet sind, zwei Rollen (3a, 3b) gleichzeitig zu bewegen, um gleichzeitig zwei der genannten Beutel (13) der gleichen Länge zu erhalten.

## Revendications

1. Méthode pour la réalisation d'enveloppes (13) à partir d'un rouleau (3a) de papier encollé (3) pour contenir des instruments (12) à stériliser dans l'autoclave en utilisant un appareil de soudage thermique (1), ladite méthode comprenant les phases suivantes :
- mesure de la longueur dudit instrument à stériliser (12) ;
- avance d'une quantité dudit papier encollé (3) adaptée pour ledit instrument à stériliser (12) ;
- réalisation d'une première soudure et coupe dudit papier encollé (3) pour réaliser ladite enveloppe (13) comprenant un côté ouvert (14) ;
- introduction dudit instrument (12) dans ladite enveloppe (13) ;
- insertion de ladite enveloppe (13) au niveau dudit côté ouvert (14) à l'intérieur d'une fente (15) présente dans ledit appareil de soudage thermique (1) ;
- réalisation de la seconde soudure de ladite enveloppe (13) au niveau dudit côté ouvert (14) ;
et **caractérisé en ce que** ledit papier encollé (3) placé dans ledit appareil de soudage thermique (1) est automatiquement rétracté immédiatement après ladite réalisation de ladite première soudure et coupe de façon à rendre possible ladite réalisation de ladite seconde soudure sans endommager la partie terminale (36) dudit rouleau (3a).

2. Méthode selon la revendication 1, dans laquelle la longueur de ladite enveloppe (13) désirée est mémorisée en appuyant sur un bouton de mémoire (11) de façon à être rappelée par la suite.

3. Méthode selon la revendication 2, dans laquelle l'opérateur définit la longueur de ladite enveloppe (13) à l'aide dudit bouton de mémoire (11) et le nombre desdites enveloppes (13) désiré, ledit appareil de soudage thermique (1) étant apte à les préparer automatiquement.

4. Méthode selon une ou plusieurs des revendications précédentes, comprenant la phase de réglage de la quantité dudit papier encollé (3) en le faisant reculer.

5. Appareil de soudage thermique (1) pour la réalisation d'enveloppes (13) pour contenir des instruments (12) à stériliser dans l'autoclave, à partir d'un rouleau (3a) de papier encollé (3), ledit appareil de soudage thermique (1) comprenant :
- des moyens d'enroulement et déroulement (4) dudit rouleau (3a) ;
- un plan d'appui (2) pour ledit papier encollé (3) ;
- des moyens de soudage (20) dudit papier encollé (3) ;
- des moyens de coupe (28) dudit papier encollé (3) ;
**caractérisé en ce qu'**il est apte à activer automatiquement lesdits moyens d'enroulement et déroulement (4) pour commander un enroulement partiel dudit papier encollé (3) à la suite de l'actionnement desdits moyens de coupe (28).

6. Appareil de soudage thermique selon la revendication 5, dans lequel lesdits moyens de coupe (28) opèrent fondamentalement simultanément auxdits moyens de soudage (20).

7. Appareil de soudage thermique selon la revendication 5 ou 6, comprenant des moyens de mémorisation aptes à mémoriser la quantité de papier encollé (3) qui est déroulée pour la réalisation d'une pluralité desdites enveloppes (13) de la même longueur.

8. Appareil de soudage thermique selon une ou plusieurs des revendications 5-7, comprenant des moyens d'actionnement rapide (10a) desdits moyens de soudage (20) et desdits moyens de coupe (28) simultanément et moyens d'actionnement rapide (10b) des seuls dits moyens de soudage (20).

9. Appareil de soudage thermique selon une ou plusieurs des revendications 5-8, comprenant un presseur pour le papier encollé (29) façonné de manière à faciliter l'action d'une lame, constituant lesdits moyens de coupe (28), à travers des moyens d'introduction de chaque côté et agissant en outre d'élément antagoniste mobile arrière lequel associé à un élément antagoniste fixe avant sur la partie terminale d'une goulotte, permet d'obtenir une coupe précise.

10. Appareil de soudage thermique selon une ou plusieurs des revendications 5-9, comprenant des guides papier pour le centrage dudit rouleau (3a), sur un porte rouleau, constituant une partie des moyens d'enroulement et déroulement (4).

11. Appareil de soudage thermique selon une ou plusieurs des revendications 5-10, comprenant des guides papier pour le centrage dudit rouleau (3a) sur une fente d'entrée arrière dudit papier encollé (3).

12. Appareil de soudage thermique selon une ou plusieurs des revendications 5-11, dans lequel ledit plan d'appui (2) comprend une échelle divisée en centimètres (7) pour la mesure dudit papier encollé (3).

13. Appareil de soudage thermique selon une ou plusieurs des revendications 5 à 12, dans lequel les moyens d'enroulement et déroulement (4) sont aptes à mettre en mouvement deux rouleaux (3a, 3b) simultanément de façon à obtenir en même temps deux desdites enveloppes (13) de la même longueur.
